# EUROPÄISCHE PATENTSCHRIFT

(11) **EP 1 205 653 B1**
(45) Veröffentlichungstag und Bekanntmachung des Hinweises auf die Patenterteilung: **06.09.2006**
(21) Anmeldenummer: 01126842.2
(22) Anmeldetag: 12.11.2001
(51) Int. Cl.: F02C 9/28

(54) **Brennersystem mit gestufter Brennstoff-Eindüsung und Verfahren zum Betrieb**
Burner with staged fuel injection and method of operation
Brûleur avec injection de combustible étagée et procédé de fonctionnement

(30) Priorität: 13.11.2000 DE 10056124
(43) Veröffentlichungstag der Anmeldung: 15.05.2002
(73) Patentinhaber: Alstom Technology Ltd, 5400 Baden (CH)
(72) Erfinder: Eroglu, Adnan, Dr., 5417 Untersiggenthal (CH); Stuber, Peter, Dr., 8037 Zürich (CH); Paschereit, Christian Oliver, Dr., 5400 Baden (CH); Knöpfel, Hans Peter, 5605 Dottikon (CH)

(56) Entgegenhaltungen:
- EP-A- 0 962 704
- DE-A- 4 446 945
- US-A- 4 735 052
- US-A- 6 003 299

## Beschreibung

### Technisches Anwendungsgebiet

Die vorliegende Erfindung betrifft ein Brennersystem mit gestufter Brennstoff-Eindüsung sowie ein zugehöriges Betriebsverfahren. Das Brennersystem umfasst im Wesentlichen einen Brenner mit einem Drallerzeuger für einen Verbrennungsluftstrom und Mittel zum Einbringen von Brennstoff in den Verbrennungsluftstrom, wobei die Mittel zum Einbringen von Brennstoff in den Verbrennungsluftstrom wenigstens eine erste Brennstoffzuführung mit einer ersten Gruppe von Brennstoff-Austrittsöffnungen für eine erste Vormisch-Brennstoffmenge und eine zweite Brennstoffzuführung mit einer zweiten Gruppe von Brennstoff-Austrittsöffnungen stromab der ersten Gruppe von Brennstoff-Austrittsöffnungen für eine zweite Vormisch-Brennstoffmenge umfassen. Ein bevorzugtes Anwendungsgebiet für ein derartiges Brennersystem liegt in der Gas- und Dampfturbinentechnik.

### Stand der Technik

Aus der EP 0 321 809 B1 ist ein aus mehreren Schalen bestehender kegelförmiger Brenner, ein sogenannter Doppelkegelbrenner bekannt. Durch den kegelförmigen aus mehreren Schalen zusammengesetzten Drallerzeuger wird eine geschlossene Drallströmung im Kegelkopf erzeugt, welche aufgrund des zunehmenden Dralls entlang der Kegelspitze instabil wird und in eine anulare Drallströmung mit Rückströmung im Kern übergeht. Die Schalen des Drallerzeugers sind derart zusammengesetzt, dass entlang der Brennerachse tangentiale Lufteintrittsschlitze für Verbrennungsluft gebildet werden. An der hierdurch entstehenden Einströmkante der Kegelschalen sind Zuführungen für das Vormischgas, d.h. den gasförmigen Brennstoff, vorgesehen, die in Richtung der Brennerachse verteilte Austrittsöffnungen für das Vormischgas aufweisen. Das Gas wird durch die Austrittsöffnungen bzw. Bohrungen quer zum Lufteintrittsspalt eingedüst. Diese Eindüsung führt in Verbindung mit dem im Drallraum erzeugten Drall der Verbrennungsluft-Brenngas-Strömung zu einer guten Durchmischung des Brenn- bzw. Vormischgases mit der Verbrennungsluft. Eine gute Durchmischung ist bei derartigen Vormischbrennern die Voraussetzung für niedrige NOₓ-Werte beim Verbrennungsvorgang.

Zur weiteren Verbesserung eines derartigen Brenners ist aus der EP 0 280 629 A2 ein Brenner für einen Wärmeerzeuger bekannt, der im Anschluss an den Drallerzeuger eine zusätzliche Mischstrecke zur weiteren Vermischung von Brennstoff und Verbrennungsluft aufweist. Diese Mischstrecke kann beispielsweise als nachgeschaltetes Rohr ausgeführt sein, in das die aus dem Drallerzeuger austretende Strömung ohne nennenswerte Strömungsverluste überführt wird. Durch diese zusätzliche Mischstrecke können der Vermischungsgrad weiter erhöht und damit die Schadstoffemissionen verringert werden.

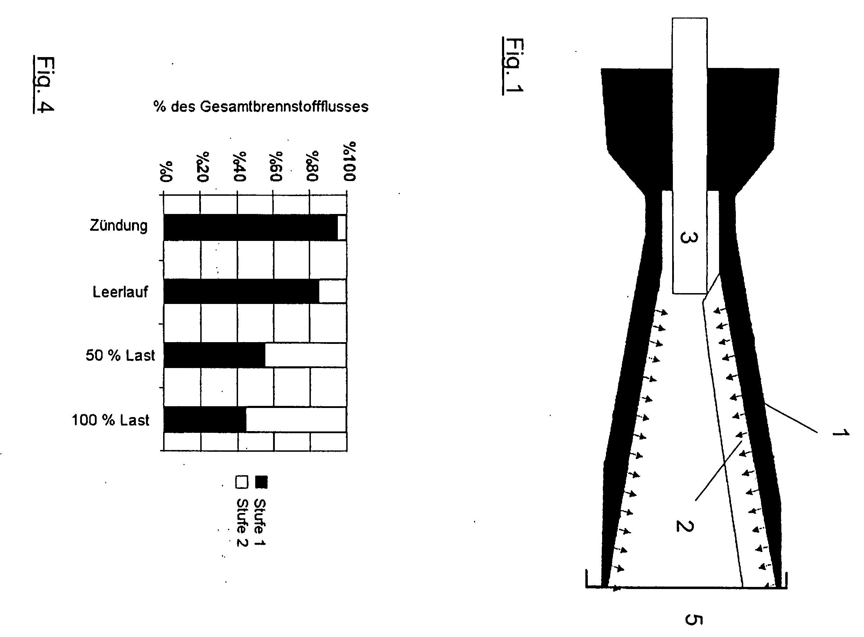

Fig. 1 zeigt schematisch ein Beispiel für derartige Brenner, bei denen der Brennstoff über Austrittsöffnungen in entlang der Brennerachse im Drallkörper 1 angeordneten Zuführungskanälen mit der eintretenden Verbrennungsluft gemischt wird. In der Figur ist hierbei der kegelförmige Drallkörper 1 des Brenners dargestellt, an bzw. in dem die Brennstoffzuführungen mit den entlang der Brennerachse angeordneten Austrittsöffnungen 2 - in der Figur durch Pfeile für eingedüsten Brennstoff angedeutet - verlaufen. Diese Brennstoffzuführungen sind in der Regel als einzelne Kanäle ausgebildet, die eine feste Verteilung der Brennstoff-Austrittsöffnungen 2 entlang der Brennerachse aufweisen. Weiterhin ist in der Figur eine Pilotierungslanze 3 zu erkennen, über die beim Anfahren des Brenners der Brennstoff direkt in den Drallraum eingespritzt wird. Bei steigender Last erfolgt dann ein Umschalten von dieser Pilotierungsstufe zum Vormisch-Betrieb, bei dem der Brennstoff über die genannten Brennstoff-Austrittsöffnungen 2 mit der zuströmenden Verbrennungsluft vermischt wird.

Eine weitere bekannte Brennergeometrie eines Vormisch-Brenners ist aus der WO 93/17279 bekannt. Bei dieser Anordnung wird ein zylindrischer Drallerzeuger mit einem zusätzlichen konischen Innenkörper eingesetzt. Das Vormischgas wird ebenfalls über Zuführungen mit entsprechenden Austrittsöffnungen in den Drallraum eingedüst, die entlang der axial verlaufenden Lufteintrittsschlitze angeordnet sind. Die Pilotierungszuführung dieses Brenners ist am Ende des konischen Innenkörpers vorgesehen. Die Pilotierung führt jedoch zu erhöhten NOₓ-Emissionen, da bei dieser Betriebsweise nur eine unzureichende Vermischung mit der Verbrennungsluft stattfinden kann.

US 4 735 052 offenbart ein Brennersystem mit einer mehrstufigen Zufuhr von Brennstoff/Luft-Vorvermischungen zur einer Brennkammer. Die Brennstoffzufuhr zu den Vorvermischungen wird gemäß den Verbrennungspulsationen und Emissionswerten des Brenners gesteuert, wobei Druck-, CO-, und NOₓ-Sensoren in der Brennkammer die entsprechenden Messwerte liefern.

Bei allen bekannten Brennersystemen ist eine einstufige Zuführung des Brennstoffes im Vormischbetrieb vorgesehen. Die Größe, Verteilung, Anordnung, der Abstand sowie die Anzahl der Austrittsöffnungen der Brennstoffzuführung entlang der Brennerachse müssen hierbei optimiert werden, um die Anforderungen an geringe Emissionen, die Extinktionsgrenze, die Rückschlaggrenze sowie die Anforderungen an die Stabilität der Verbrennung zu erfüllen. Hierbei ist es nahezu unmöglich, alle diese Anforderungen mit einer festen Verteilung der Austrittsöffnungen auch unter wechselnden Betriebs- und Umgebungsbedingungen zu erfüllen. Die Charakteristik der Eindüsung hinsichtlich Eindringtiefe und Einmischung der Gasstrahlen sowie die Brennstoffverteilung entlang der Lufteintrittsschlitze bzw. der Brennerachse sind durch die Wahl der genannten Parameter festgelegt. Eine Verteilung der Austrittsöffnungen, die für einen bestimmten Anlagentyp, beispielsweise mit Ringbrennkammer, optimiert ist, stellt für einen anderen Anlagentyp, beispielsweise mit einer Silo-Brennkammer, nicht mehr das Optimum dar. Weiterhin verändern sich die Betriebsbedingungen einer Anlage mit der Zeit, da beispielsweise Leckströme durch alterungsbedingte Effekte anwachsen. Eine fest vorgegebene Verteilung der Austrittsöffnungen kann diese Alterungserscheinungen nicht ausgleichen.

Ein weiterer Nachteil der bekannten Verfahren zum Betrieb von Vormisch-Brennern liegt darin, dass diese für niedrige Emissionen und niedrige Verbrennungsoszillationen unter Volllastbedingungen optimiert sind. Um den Brenner anzufahren und die Gas-Turbine zu starten, wird eine zusätzliche Pilotierungsstufe benötigt. Bei einer bestimmten Betriebslast, bei der die Verbrennung im Vormischbetrieb aufrechterhalten werden kann, wird der Brenner von der Pilotierungs- zur Vormischstufe umgeschaltet. In gleicher Weise ist beim Herunterfahren der Gasturbine das Umschalten vom Vormischbetrieb zur Pilotierung erforderlich. Diese Umschaltvorgänge rufen jedoch starke Verbrennungsoszillationen sowie große Lastschwingungen hervor. Weiterhin werden größere Mengen eines inerten Gases benötigt, um die Brennstoffzuführungen, die nach dem Umschalten nicht länger in Betrieb sind, zu spülen. Dies ist erforderlich, um eine Zündung der nicht genutzten Brennstoffzuführungen durch zirkulierende heiße Gase zu vermeiden.

Weiterhin sind Umschaltvorgänge von flüssigem zu gasförmigem Brennstoff oder umgekehrt mit den bestehenden Brennstoffeinspritztechniken aufgrund der Nähe der Einspritzdüsen für Flüssigbrennstoff zu den Eintrittsöffnungen der Pilotierung nur schwer zu realisieren.

Die Aufgabe der vorliegenden Erfindung besteht darin, ein Brennersystem sowie ein Verfahren zum Betrieb eines Brenners anzugeben, die die obigen Nachteile nicht aufweisen und einen optimierten Betrieb auch bei wechselnden Betriebs- oder Umgebungsbedingungen ermöglichen.

### Darstellung der Erfindung

Die Aufgabe wird mit dem Brennersystem und dem Verfahren gemäß den Patentansprüchen 1 bzw. 8 gelöst. Vorteilhafte Ausgestaltungen des Brennersystems sowie des Verfahrens sind Gegenstand der Unteransprüche.

Das erfindungsgemäße Brennersystem besteht im Wesentlichen aus einem Brenner mit einem Drallerzeuger für einen Verbrennungsluftstrom und Mitteln zum Einbringen von Brennstoff in den Verbrennungsluftstrom, wobei die Mittel zum Einbringen von Brennstoff in den Verbrennungsluftstrom wenigstens eine erste Brennstoffzuführung mit einer ersten Gruppe von Brennstoff-Austrittsöffnungen für eine erste Vormischbrennstoffmenge (erste Stufe) und eine zweite Brennstoffzuführung mit einer zweiten Gruppe von Brennstoff-Austrittsöffnungen (zweite Stufe) stromab der ersten Gruppe von Brennstoff-Austrittsöffnungen für eine zweite Vormisch-brennstoffmenge umfassen. Es versteht sich von selbst, dass auch weitere Gruppen von Brennstoff-Austrittsöffnungen für weitere Vormisch-Brennstoffmengen unabhängig von der ersten und zweiten Gruppe vorgesehen sein können. Weiterhin sind in der Regel mehrere erste und zweite Brennstoffzuführungen für die jeweilige Stufe mit ihren Austrittsöffnungen über den Umfang des Drallkörpers verteilt, wie dies bereits von den einstufigen Systemen bekannt ist. Das Brennersystem umfasst weiterhin einen ersten Messwertaufnehmer, der Pulsationen einer durch den Brenner initiierten Verbrennung erfasst, und/oder einen zweiten Messwertaufnehmer, der Emissionswerte der Verbrennung erfasst. Die Messwertaufnehmer sind mit einer Kontrolleinrichtung verbunden, die die Messdaten von dem bzw. den Messwertaufnehmer(n) erhält und die Brennstoffzufuhr über die erste und zweite Brennstoffzuführung - sowie gegebenenfalls weitere Brennstoffzuführungen - in Abhängigkeit der von dem bzw. den Messwertaufnehmer(n) gelieferten Messdaten steuert. Die Steuerung erfolgt hierbei gemäß den gewünschten Vorgaben. Selbstverständlich können auch mehr als ein Messwertaufnehmer zur Erfassung der Pulsationen und/oder der Emissionswerte vorgesehen sein.

Im einfachsten Fall eines derartigen Brennersystems sind alle oder einige der Brennstoffzuführungen, die bei einstufigen Systemen am Drallkörper angeordnet sind, in zumindest zwei voneinander unabhängige Kanäle für den Brennstoff unterteilt, um die unterschiedlichen Stufen bilden. Es können selbstverständlich auch mehrere nebeneinander liegende Brennstoffzuführungen vorgesehen sein, bei denen die Austrittsöffnungen entsprechend entlang der Längsachse gegeneinander versetzt sind, um die getrennten Stufen zu bilden. Dem Fachmann stehen hierbei viele Möglichkeiten zur Verfügung, um unterschiedliche Gruppen von Austrittsöffnungen am Drallkörper entlang der Brennerachse vorzusehen, die unabhängig voneinander mit Brennstoff beaufschlagbar sind. Die Brennstoffzuführung zu den einzelnen Stufen wird über die Kontrolleinrichtung entsprechend den Vorgaben in Abhängigkeit von den Pulsationen und/oder Emissionswerten gesteuert oder geregelt. Vorzugsweise erfolgt dies über Steuerventile, die in den Versorgungsleitungen zur ersten und zweiten Brennstoffzuführung vorgesehen sind.

Geeignete Messwertaufnehmer, die im Bereich der Flamme - zur Erfassung der Pulsationen - bzw. am Ausgang der Brennkammer - zur Messung der Emissionswerte - vorgesehen sein können, sind dem Fachmann bekannt. Hierfür gibt es eine Vielzahl von Sensoren zur Erfassung der Emissionen bzw. in der Regel akustischen Sensoren zur Erfassung der Pulsationen.

Die Steuerung der Brennstoffzuführung über die Kontrolleinrichtung erfolgt vorzugsweise anhand von Vergleichsdaten, die in einem Speicher der Kontrolleinrichtung abgelegt sind. Die Kontrolleinrichtung vergleicht hierbei die gemessenen Daten mit den Vergleichsdaten, um den gegenwärtigen Betriebspunkt des Brennersystems feststellen zu können und die Brennstoffzufuhr in Richtung des gewünschten Betriebspunktes steuern zu können.

Durch den Einsatz eines Brennersystems mit gestufter Brennstoff-Eindüsung wird ein gegenüber einstufigen Brennersystemen deutlich erweiterter Betriebsbereich ermöglicht. Durch geeignete Anordnung der Versorgungsleitungen zu den Brennstoffzuführungen der einzelnen Stufen ist hierfür kein zusätzlicher getrennter Brennstoffkreislauf erforderlich. Die unabhängige Steuerungsmöglichkeit der zumindest zwei Stufen des Brennersystems in Verbindung mit der Kontrolleinrichtung ermöglichen eine Betriebsweise mit niedrigen Pulsationen von der Zündung bis zur Grundlast sowie niedrigen NOₓ-Emissionen. Eine Pilotierungsstufe ist bei diesem Brennersystem nicht erforderlich, so dass auch keine Umschaltvorgänge mit den daraus resultierenden Pulsationen oder Lastschwingungen auftreten. Für den Betrieb des Brennersystems ist kein Spülen mit inerten Gasen, wie beispielsweise N₂, erforderlich. Dies führt gleichzeitig zur Verminderung der Betriebskosten des Systems. Aufgrund des Fehlens der Pilotierungsstufe ist auch ein einfacheres Umschalten von Brennöl- zu Brenngasbetrieb oder umgekehrt realisierbar.

Ein besonderer Vorteil des vorgeschlagenen Brennersystems besteht in der dynamischen Steuerungsmöglichkeit über die Kontrolleinrichtung, wobei für jeden Anlagentyp, jede Umgebungsbedingung, jedes Alter sowie jede Leckagestärke ein optimaler Betriebspunkt realisierbar ist. Insbesondere lässt sich dieser Betriebspunkt in Abhängigkeit von den genannten Parametern während des Betriebs der Anlage ständig anpassen. Das Brennersystem sowie das zugehörige Betriebsverfahren ermöglichen somit einen optimalen Betrieb der Anlage unter wechselnden Betriebs- und Umgebungsbedingungen.

In einer bevorzugten Ausführungsform des vorliegenden Brennersystems zweigt die Versorgungsleitung zur Brennstoffzuführung für die zweite Stufe von der ersten Stufe ab - oder umgekehrt -. In diesem Fall kann das Brennersystem nur über die Kontrolle eines Steuerventils gesteuert werden, das die Verteilung der Brennstoffmenge zu den beiden Brennstoffzuführungen beeinflusst. Bei vorgegebener Gesamtbrennstoffzuführung wird somit die Verteilung zwischen den beiden Stufen über dieses Ventil gesteuert. Die Kontrolleinrichtung ist hierbei lediglich mit diesem Ventil verbunden.

In der bevorzugten Betriebsweise des vorliegenden Brennersystems wird die Brennstoffzufuhr zur ersten und zweiten Stufe derart gesteuert, dass die Pulsationen und die Emissionswerte minimiert werden. Vorzugsweise erfolgt die Steuerung durch den Vergleich mit in der Kontrolleinrichtung gespeicherten Vergleichsdaten, die in Vorversuchen bestimmt wurden und eine Abhängigkeit der Pulsationen und Emissionswerte von der Brennstoffzufuhr zur ersten und zweiten Stufe bzw. von der Brennstoffverteilung zwischen erster und zweiter Stufe aufzeigen. Auch hierbei ist es selbstverständlich möglich, mehr als zwei Stufen in gleicher Weise zu betreiben.

Ein sehr gutes Betriebsverhalten zeigt sich dann, wenn bei stationärem Betrieb die Brennstoffzufuhr derart gesteuert wird, dass der Betriebspunkt unterhalb des Maximums der Pulsationen - in Abhängigkeit von der Brennstoffzufuhr zur ersten Stufe - und bei transientem oberhalb des Maximums der Pulsationen liegt.

Auch wenn in der vorliegenden Patentanmeldung die genaue Größe der Austrittsöffnungen, deren Anordnung, deren Abstand sowie deren Verteilung nicht näher beschrieben werden, so ist es für den Fachmann kein Problem, geeignete Geometrien und Verteilungen zu finden. Dies kann bereits dadurch erfolgen, dass die bei bestehenden einstufigen Brennern vorgesehenen Austrittsöffnungen am Drallkörper entlang der Brennerachse in gleicher Weise auch beim vorliegenden Brennersystem realisiert werden, wobei der Brennstoffzuführungskanal hierbei.lediglich in zwei Teile aufgetrennt werden muss, die die erste und zweite Stufe bilden. Möglichkeiten zur Optimierung bzw. Anpassung der Verteilung der Austrittsöffnungen sind dem Fachmann von einstufigen Brennern bekannt.

### Kurze Beschreibung der Zeichnungen

Die vorliegende Erfindung wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1: ein einstufiges Brennersystem gemäß dem Stand der Technik;
- Fig. 2: ein Beispiel für ein vorliegendes Brennersystem in schematischer Darstellung;
- Fig. 3: ein Beispiel für eine Abhängigkeit der Pulsationen und Emissionswerte eines erfindungsgemäßen Brennersystems in Abhängigkeit von der Brennstoffzufuhr zur ersten Stufe; und
- Fig. 4: ein Beispiel für die Betriebsweise der beiden Stufen des vorliegenden Brennersystems in Abhängigkeit von der Betriebslast.

### Wege zur Ausführung der Erfindung

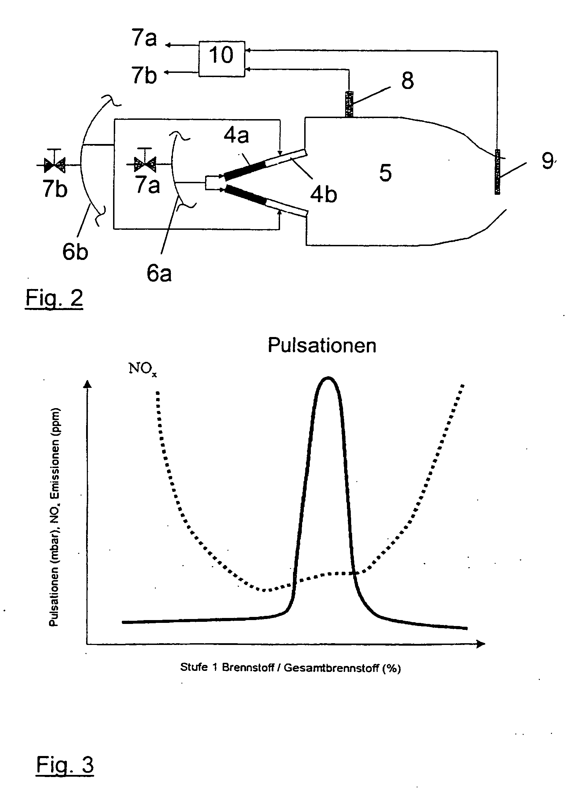

Fig. 1 zeigt ein einstufiges Brennersystem, wie dies aus dem Stand der Technik bekannt ist und in der Beschreibungseinleitung bereits erläutert wurde. Gegenüber diesem System wird bei der vorliegenden Erfindung ein zumindest zweistufiges Brennersystem eingesetzt, wie dies schematisch anhand der Fig. 2 zu erkennen ist. Der kegelförmige Drallkörper 1 dieses Brennersystems ist hierbei ebenso wie die Brennstoffzuführungen 4a und 4b an bzw. in diesem Drallkörper 1 nur stark schematisiert dargestellt. Anhand dieser Figur sind die beiden Stufen zu erkennen, die durch die getrennten Brennstoffzuführungen 4a und 4b mit den entsprechenden - nicht dargestellten - Austrittsöffnungen gebildet werden. In jedem Fall ist das wesentliche Merkmal dieses Brennersystems, die zwei getrennten Stufen entlang der Längsachse des Brenners, zu erkennen. An den Brenner schließt sich die Brennkammer 5 an, in der das durch die Vormischung erzeugte Brennstoff-Verbrennungsluft-Gemisch verbrannt wird. Die Brennstoffzufuhr zur ersten Stufe 4a erfolgt hierbei über ein Brennstoffverteilungssystem 6a. Die Brennstoffzufuhr wird hierbei über ein Regelungsventil 7a eingestellt. In gleicher Weise erfolgt die Brennstoffzufuhr zur zweiten Stufe 4b über ein weiteres Brennstoffverteilungssystem 6b mit einem Regelventil 7b. Beide Brennstoffverteilungssysteme sind in diesem Beispiel getrennt voneinander vorgesehen. Zur Erfassung der Pulsationen der Verbrennung ist an der Brennkammer 5 im Bereich des Verbrennungszentrums ein Pulsationssensor 8 vorgesehen, der die Messwerte über die Stärke der Pulsationen an die Kontrolleinrichtung 10 meldet. Weiterhin ist im Bereich des Brennkammerauslasses ein Sensor 9 für die Emissionswerte vorgesehen, der seine Daten ebenfalls an die Kontrolleinrichtung 10 leitet. In der Kontrolleinrichtung 10 werden die gemessenen Daten mit Vergleichsdaten verglichen und die beiden Regelventile 7a und 7b zur Aufrechterhaltung bzw. zum Erreichen eines vorgegebenen Betriebspunktes hinsichtlich der Emissionswerte und Pulsationen angesteuert.

In einer vorteilhaften Ausführungsform, bei der beispielsweise das erste Brennstoffverteilungssystem 6a direkt vom zweiten Brennstoffverteilungssystem 6b abzweigt, kann die Kontrolleinrichtung 10 auch nur zur Steuerung bzw. Regelung des Regelventils 7a eingesetzt werden, falls dieses direkt an der Abzweigung vorgesehen ist. Durch Steuerung des Ventils 7a kann dann bei über das Regelventil 7b vorgegebener Gesamtbrennstoffzuführung die Brennstoffverteilung auf beide Stufen beeinflusst werden. Durch diese vereinfachte Technik kann in gleicher Weise eine optimierte Betriebsweise der Anlage unter unterschiedlichen Betriebs- und Umgebungsbedingungen erreicht werden. Insbesondere erfordert eine derartige Ausführungsform kein getrenntes Brennstoffzuführsystem für die erste Stufe. Bestehende Systeme können auf einfache Weise über eine geeignete Verzweigung nachgerüstet werden. Weiterhin kann dieses interne Ventil 7a derart gesteuert werden, dass jederzeit ein minimaler Brennstofffluss durch die zweite Stufe bei jeder Betriebslast vorliegt, so dass keine Spülung mit inerten Gasen erforderlich ist. Die Möglichkeit der Steuerung nur eines Ventils vereinfacht die gesamte Steuerungstechnik.

Fig. 3 zeigt ein Beispiel für Pulsationen und Emissionswerte eines erfindungsgemäßen Brennersystems als Funktion des Brennstoffanteils, der der ersten Stufe zugeführt wird, in Abhängigkeit von der gesamten Brennstoffzuführung. Hierbei ist einerseits ein Minimum der NOₓ-Emissionen zu erkennen, in dem jedoch auch ein Maximum der Pulsationen liegt. Eine derartige Abhängigkeit kann durch Vorversuche ermittelt werden. Vorzugsweise werden die Daten dieser Abhängigkeiten bzw. dieser Kurve in der Kontrolleinrichtung 10 gespeichert bzw. dort einprogrammiert. Die einprogrammierten Daten werden von der Kontrolleinrichtung 10 während des Betriebs als Grundlage für die Entscheidung herangezogen, welche Brennstoffmengen den einzelnen Stufen zuzuführen sind, um eine geringe Emission bei niedrigen Pulsationen aufrechtzuerhalten bzw. zu erreichen.

Vorzugsweise werden hierbei die von den Messwertaufnehmern 8, 9 erhaltenen Daten mit den abgespeicherten Vergleichsdaten verglichen, um den Betriebspunkt des Brennersystems auf die linke oder rechte Seite des in der Fig. 3 gezeigten Pulsationspeaks zu bringen. Bei stationärem Betrieb wird hierbei die linke Seite aufgrund der geringen Emissionswerte bevorzugt. Bei transientem Betrieb, bei dem Emissionserwägungen einem robusten dynamischen Verhalten des Brenners nachstehen, wird die rechte Seite des Pulsationspeaks bevorzugt.

Auf diese Weise kann eine Gasturbine von der Zündung bis zur Grundlast ohne gesonderte Pilotierungsstufe und mit lediglich einem einzigen Regelventil betrieben werden. Fig. 4 zeigt hierbei eine beispielhafte Betriebsweise in dem Fall, in dem zwei Stufen mit einem Stufungsverhältnis von 50% im Brennersystem vorliegen. Durch das Regelventil wird hierbei lediglich die Verteilung des gesamten zugeführten Brennstoffflusses auf die beiden Stufen gesteuert. Während bei Zündung bzw. beim Anfahren des Brennersystems bzw. der Gasturbine der Brennstoff beinahe vollständig der ersten Stufe zugeführt wird, so ändert sich dieses Verhältnis im Leerlaufbetrieb, bei 50% Last sowie bei 100% Last zunehmend. Bei 100% Last wird schließlich die zweite Stufe mit etwas mehr Brennstoff versorgt als die erste Stufe. Mit einem derartigen Betriebskonzept lässt sich eine stabile Betriebsweise des Brennersystems ohne zusätzliche Notwendigkeit einer Pilotierungsstufe realisieren. Es versteht sich von selbst, dass sich die dargestellte Brennstoffverteilung durch die Kontrolleinrichtung in Abhängigkeit von Umgebungsbedingungen sowie alterungsbedingt während des Betriebs der Anlage verschiebt.

### BEZUGSZEICHENLISTE

- 1: Drallkörper
- 2: Austrittsöffnungen
- 3: Pilotierungslanze
- 4a: Brennstoffzuführung der ersten Stufe
- 4b: Brennstoffzuführung der zweiten Stufe
- 5: Brennkammer
- 6a: Brennstoffverteilungssystem der ersten Stufe
- 6b: Brennstoffverteilungssystem der zweiten Stufe
- 7a: Regelventil der ersten Stufe
- 7b: Regelventil der zweiten Stufe
- 8: Pulsationssensor
- 9: Emissionssensor
- 10: Kontrolleinrichtung

## Patentansprüche

1. Brennersystem mit gestufter Brennstoff-Eindüsung, im Wesentlichen bestehend aus
- einem Brenner mit einem Drallerzeuger (1) für einen Verbrennungsluftstrom und Mitteln zum Einbringen von Brennstoff in den Verbrennungsluftstrom, wobei die Mittel zum Einbringen von Brennstoff in den Verbrennungsluftstrom wenigstens eine erste Brennstoffzuführung (4a) mit einer ersten Gruppe von Brennstoff-Austrittsöffnungen für eine erste Vormisch-Brennstoffmenge und eine zweite Brennstoffzuführung (4b) mit einer zweiten Gruppe von Brennstoff-Austrittsöffnungen stromab der ersten Gruppe von Brennstoff-Austrittsöffnungen für eine zweite Vormisch-Brennstoffmenge umfassen;
- einem ersten Messwertaufnehmer (8), der Pulsationen einer durch den Brenner initiierten Verbrennung erfasst, und/oder einem zweiten Messwertaufnehmer (9), der Emissionswerte der Verbrennung erfasst; und
- einer Kontrolleinrichtung (10), die mit dem bzw. den Messwertaufnehmern (8, 9) zum Erhalt von Messdaten verbunden ist und die Brennstoffzufuhr über die erste und zweite Brennstoffzuführung (4a, 4b) in Abhängigkeit der von den Messwertaufnehmern (8, 9) gelieferten Messdaten steuert.

2. Brennersystem nach Anspruch 1,
**dadurch gekennzeichnet,**
**dass** die Kontrolleinrichtung (10) ein Programm beinhaltet, das durch einen Vergleich der von den Messwertaufnehmern (8, 9) gelieferten Daten mit Vergleichsdaten, die in einem Speicher der Kontrolleinrichtung (10) abgelegt sind, Steuersignale für die Steuerung der Brennstoffzufuhr über die erste und zweite Brennstoffzuführung (4a, 4b) liefert.

3. Brennersystem nach Anspruch 1 oder 2,
**dadurch gekennzeichnet,**
**dass** in Versorgungsleitungen (6a, 6b) für die erste und zweite Brennstoffzuführung (4a, 4b) ein oder mehrere Steuerventile (7a, 7b) für die Einstellung der Brennstoffzufuhr vorgesehen sind.

4. Brennersystem nach Anspruch 3,
**dadurch gekennzeichnet,**
**dass** die Steuerventile (7a, 7b) von der Kontrolleinrichtung (10) gesteuert werden.

5. Brennersystem nach einem der Ansprüche 3 oder 4,
**dadurch gekennzeichnet,**
**dass** die Versorgungsleitung (6b) für die zweite Brennstoffzuführung (4b) von der Versorgungsleitung (6a) für die erste Brennstoffzuführung (4a) abzweigt oder umgekehrt.

6. Brennersystem nach Anspruch 5,
**dadurch gekennzeichnet,**
**dass** ein Steuerventil zur Verteilung der Brennstoffmenge zwischen den Versorgungsleitungen (6a, 6b) vorgesehen ist, das von der Kontrolleinrichtung (10) gesteuert wird.

7. Brennersystem nach einem der Ansprüche 1 oder 6,
**dadurch gekennzeichnet,**
**dass** die erste und zweite Gruppe von Brennstoff-Austrittsöffnungen am Drallerzeuger (1) im Wesentlichen in Richtung der Brennerachse angeordnet sind.

8. Verfahren zum Betrieb eines Vormischbrenners mit gestufter Brennstoff-Eindüsung, der zumindest eine erste und eine stromab der ersten angeordnete zweite Stufe zum Einbringen von Brennstoff in einen Verbrennungsluftstrom aufweist, insbesondere zum Betrieb des Brennersystems nach einem der vorangehenden Ansprüche,
wobei Pulsationen einer durch den Brenner initiierten Verbrennung und/oder Emissionswerte der Verbrennung erfasst werden und die Brennstoffzufuhr zur ersten und zweiten Stufe in Abhängigkeit von den erfassten Pulsationen und/oder Emissionswerten gesteuert wird.

9. Verfahren nach Anspruch 8,
**dadurch gekennzeichnet,**
**dass** die Brennstoffzufuhr zur ersten und zweiten Stufe derart gesteuert wird, dass die Pulsationen und/oder die Emissionswerte minimiert werden.

10. Verfahren nach Anspruch 8 oder 9,
**dadurch gekennzeichnet,**
**dass** die Steuerung der Brennstoffzufuhr über Steuerventile erfolgt, die in den Versorgungsleitungen für die erste und zweite Stufe vorgesehen sind.

11. Verfahren nach Anspruch 8 oder 9,
**dadurch gekennzeichnet,**
**dass** die Steuerung der Brennstoffzufuhr über ein Steuerventil erfolgt, das die Aufteilung des Brennstoffes zwischen den Versorgungsleitungen der beiden Stufen steuert.

12. Verfahren nach einem der Ansprüche 8 bis 11,
**dadurch gekennzeichnet,**
**dass** die Steuerung durch Vergleich mit Vergleichsdaten erfolgt, die in Vorversuchen bestimmt werden und eine Abhängigkeit der Pulsationen und/oder Emissionswerte von der Brennstoffzufuhr zur ersten und zweiten Stufe aufzeigen.

13. Verfahren nach Anspruch 12,
**dadurch gekennzeichnet,**
**dass** bei stationärem Betrieb die Brennstoffzufuhr derart gesteuert wird, dass der Betriebspunkt unterhalb des Maximums der Pulsationen liegt.

14. Verfahren nach Anspruch 11 oder 12,
**dadurch gekennzeichnet,**
**dass** bei transientem Betrieb die Brennstoffzufuhr derart gesteuert wird, dass der Betriebspunkt oberhalb des Maximums der Pulsationen liegt.

## Claims

1. Burner system with staged fuel injection, essentially consisting of
- a burner with a swirl generator (1) for a combustion-air stream and means for the introduction of fuel into the combustion-air stream, the means for the introduction of fuel into the combustion-air stream comprising at least one first fuel delivery (4a) with a first group of fuel outlet ports for a first premix fuel quantity and one second fuel delivery (4b) with a second of group of fuel outlet ports, downstream of the first group of fuel outlet ports, for a second premix fuel quantity;
- a first measurement transducer (8), which detects pulsations of a combustion initiated by the burner, and/or a second measurement transducer (9), which detects combustion emission values; and
- a monitoring device (10) which is connected to the measurement transducer or measurement transducers (8, 9) in order to obtain measurement data and which controls the fuel delivery via the first and the second fuel delivery (4a, 4b) as a function of the measurement data supplied by the measurement transducers (8, 9).

2. Burner system according to Claim 1, **characterized in that** the monitoring device (10) contains a program which, by a comparison of the data supplied by the measurement transducers (8, 9) with reference data stored in a memory of the monitoring device (10), supplies control signals for controlling the fuel delivery via the first and the second fuel delivery (4a, 4b).

3. Burner system according to Claim 1 or 2, **characterized in that** one or more control valves (7a, 7b) for setting the fuel delivery are provided in supply lines (6a, 6b) for the first and the second fuel delivery (4a, 4b).

4. Burner system according to Claim 3, **characterized in that** the control valves (7a, 7b) are controlled by the monitoring device (10).

5. Burner system according to either one of Claims 3 or 4, **characterized in that** the supply line (6b) for the second fuel delivery (4b) branches off from the supply line (6a) for the first fuel delivery (4a), or vice versa.

6. Burner system according to Claim 5, **characterized in that** a control valve for distributing the fuel quantity between the supply lines (6a, 6b) is provided, which is controlled by the monitoring device (10).

7. Burner system according to either one of Claims 1 and 6, **characterized in that** the first and the second group of fuel outlet ports are arranged on the swirl generator (1) essentially in the direction of the burner axis.

8. Method for operating a premix burner with staged fuel injection, which has at least one first stage and one second stage, arranged downstream of the first, for the introduction of fuel into a combustion-air stream, in particular for operating the burner system according to one of the preceding claims, pulsations of a combustion initiated by the burner and/or combustion emission values being detected, and the fuel delivery to the first and the second stage being controlled as a function of the detected pulsations and/or emission values.

9. Method according to Claim 8, **characterized in that** the fuel delivery to the first and the second stage is controlled in such a way that the pulsations and/or the emission values are minimized.

10. Method according to Claim 8 or 9, **characterized in that** the control of the fuel delivery takes place via control valves which are provided in the supply lines for the first and the second stage.

11. Method according to Claim 8 or 9, **characterized in that** the control of the fuel delivery takes place via a control valve which controls the division of the fuel between the supply lines of the two stages.

12. Method according to one of Claims 8 to 11, **characterized in that** control takes place by comparison with reference data which are determined in preliminary tests and which indicate a dependence of the pulsations and/or emission values on the fuel delivery to the first and the second stage.

13. Method according to Claim 12, **characterized in that**, during stationary operation, the fuel delivery is controlled in such a way that the operating point lies below the maximum of the pulsations.

14. Method according to Claim 11 or 12, **characterized in that**, during transient operation, the fuel delivery is controlled in such a way that the operating point lies above the maximum of the pulsations.

## Revendications

1. Système de brûleur avec injection de combustible étagée, constitué essentiellement
- d'un brûleur avec un générateur de tourbillon (1) pour un courant d'air comburant et de moyens pour introduire du combustible dans le courant d'air comburant, les moyens pour introduire du combustible dans le courant d'air comburant comprenant au moins une première alimentation en combustible (4a) avec un premier groupe d'ouvertures de sortie de combustible pour une première quantité de combustible de prémélange et une deuxième alimentation en combustible (4b) avec un deuxième groupe d'ouvertures de sortie de combustible en aval du premier groupe d'ouvertures de sortie de combustible pour une deuxième quantité de combustible de prémélange ;
- d'un premier enregistreur de valeurs de mesure (8) qui détecte des pulsations d'une combustion amorcée par le brûleur, et/ou d'un deuxième enregistreur de valeurs de mesure (9) qui détecte les valeurs d'émission de la combustion ; et
- d'un dispositif de contrôle (10) qui est connecté au ou aux enregistreurs de valeurs de mesure (8, 9) pour obtenir des données de mesure et qui commande l'alimentation en combustible par le biais de la première et de la deuxième alimentations en combustible (4a, 4b) en fonction des données de mesure fournies par les enregistreurs de valeurs de mesure (8, 9).

2. Système de brûleur selon la revendication 1,
**caractérisé en ce que**
le dispositif de contrôle (10) contient un programme qui, par une comparaison des données fournies par les enregistreurs de valeurs de mesure (8, 9) avec des données comparatives, qui sont stockées dans une mémoire du dispositif de contrôle (10), fournit des signaux de commande pour la commande de l'alimentation en combustible par le biais de la première et de la deuxième alimentations en combustible (4a, 4b).

3. Système de brûleur selon la revendication 1 ou 2,
**caractérisé en ce que**
l'on prévoit dans les conduites d'alimentation (6a, 6b) pour la première et la deuxième alimentations en combustible (4a, 4b) une ou plusieurs soupapes de commande (7a, 7b) pour l'ajustement de l'alimentation en combustible.

4. Système de brûleur selon la revendication 3,
**caractérisé en ce que**
les soupapes de commande (7a, 7b) sont commandées par le dispositif de contrôle (10).

5. Système de brûleur selon l'une quelconque des revendications 3 ou 4,
**caractérisé en ce que**
la conduite d'alimentation (6b) pour la deuxième alimentation en combustible (4b) part de la conduite d'alimentation (6a) pour la première alimentation en combustible (4a) ou inversement.

6. Système de brûleur selon la revendication 5,
**caractérisé en ce que**
l'on prévoit une soupape de commande pour la distribution de la quantité de combustible entre les conduites d'alimentation (6a, 6b), laquelle est commandée par le dispositif de contrôle (10).

7. Système de brûleur selon l'une quelconque des revendications 1 ou 6,
**caractérisé en ce que**
le premier et le deuxième groupes d'ouvertures de sortie de combustible sont disposés au niveau du générateur de tourbillon (1) essentiellement dans la direction de l'axe du brûleur.

8. Procédé pour faire fonctionner un brûleur à prémélange avec injection de combustible étagée, qui présente au moins un premier étage et un deuxième étage disposé en aval du premier pour l'introduction de combustible dans un courant d'air comburant, notamment pour faire fonctionner le système de brûleur selon l'une quelconque des revendications précédentes,
dans lequel des pulsations d'une combustion amorcée par le brûleur et/ou des valeurs d'émission de la combustion sont détectées et l'alimentation en combustible au premier et au deuxième étages est commandée en fonction des pulsations et/ou des valeurs d'émission détectées.

9. Procédé selon la revendication 8,
**caractérisé en ce que**
l'alimentation en combustible au premier et au deuxième étages est commandée de telle sorte que les pulsations et/ou les valeurs d'émission soient minimisées.

10. Procédé selon la revendication 8 ou 9,
**caractérisé en ce que**
la commande de l'alimentation en combustible s'effectue par le biais de soupapes de commande qui sont prévues dans les conduites d'alimentation pour le premier et le deuxième étages.

11. Procédé selon la revendication 8 ou 9,
**caractérisé en ce que**
la commande de l'alimentation en combustible s'effectue par le biais d'une soupape de commande qui commande la répartition du combustible entre les conduites d'alimentation des deux étages.

12. Procédé selon l'une quelconque des revendications 8 à 11,
**caractérisé en ce que**
la commande s'effectue par comparaison avec des données comparatives qui sont déterminées dans des essais préalables et qui indiquent une dépendance des pulsations et/ou des valeurs d'émission de l'alimentation en combustible au premier et au deuxième étages.

13. Procédé selon la revendication 12,
**caractérisé en ce que**
pour un fonctionnement en mode stationnaire, l'alimentation en combustible est commandée de telle sorte que le point de fonctionnement se trouve en dessous du maximum des pulsations.

14. Procédé selon la revendication 11 ou 22,
**caractérisé en ce que**
pour un fonctionnement en mode transitoire, l'alimentation en combustible est commandée de telle sorte que le point de fonctionnement se trouve au-dessus du maximum des pulsations.
